# EUROPEAN PATENT APPLICATION

(11) **EP 4 763 574 A1**
(43) Date of publication of application: **24.06.2026**
(21) Application number: 25224801.8
(22) Date of filing: 18.12.2025
(51) Int. Cl.: B60K 35/10, B60K 35/21, G05G 1/10, H01H 19/02, H01H 19/14

(54) **OPERATING DEVICE FOR AN ACTUATOR OF A MOTOR VEHICLE**

(30) Priority: 18.12.2024 IT 202400028872
(71) Applicant: FERRARI S.p.A., 41100 Modena (IT)
(72) Inventor: MARCON, Davide, 41100 Modena (IT); CARDITELLO, Tommaso, 41100 Modena (IT); SULTANA, Jean Paul, 41100 Modena (IT)
(74) Representative: Studio Torta S.p.A.

(57) **Abstract**

An operating device (10, 10') for an actuator (9) of a motor vehicle (1) is described, comprising a frame (15) that can be fixed to a steering wheel (4) of said motor vehicle (1); and a lever (20) that can be grasped by a user and can be moved, relative to the frame (15), to a plurality of operating positions, which are spaced apart from one another and are associated with respective distinct commands for the actuator (9); the frame (15) also comprises a plurality of visual indications (30a, 30b, 30c, 30d, 30e) associated with the operating positions of the lever (20) and representative of said commands; a light source (35) designed to emit a light beam (F); an optical conveying element (40), which is optically interposed between the light source (35) and the visual indications (30a, 30b, 30c, 30d, 30e) so as to backlight the visual indications (30a, 30b, 30c, 30d, 30e); the lever (20) comprises an optical magnifying element (45), which is optically coupled to the conveying element (40) and is adapted to magnify each visual indication (30a, 30b, 30c, 30d, 30e), when the lever (20) is in the corresponding position.

## Description

### CROSS-REFERENCE TO RELATED APPLICATIONS

This patent application claims priority from Italian patent application no. 102024000028872 filed on December 18, 2024, the entire disclosure of which is incorporated herein by reference.

### TECHNICAL FIELD

This invention relates to an operating device for an actuator of a motor vehicle.

### BACKGROUND

Known motor vehicles comprise a chassis, a pair of front wheels and a pair of rear wheels.

Known motor vehicles also comprise a steering wheel that rotates with respect to the chassis and pivots on the front wheels in such a way as to steer the front wheels in relation to the chassis.

The steering wheels of known motor vehicles also comprise multiple operating devices that can be manually operated by a driver and are designed to control respective auxiliary units of the motor vehicle, such as lighting devices and windscreen wipers.

More specifically, each operating device comprises, in turn:
- a frame attached to the steering wheel; and
- a lever projecting from the steering wheel and manually movable relative to the frame between multiple different positions associated with respective operating conditions of the auxiliary unit.

The lever is also operationally connected to a command actuator of the auxiliary unit.

As an example, the auxiliary unit is a lighting assembly that can be selectively arranged with the headlights on, the headlights dipped and the headlights on full-beam.

In the above example, the lever comprises three operating positions corresponding to the above-mentioned operating conditions of the auxiliary unit.

The frame of the operating device comprises, in a known manner, multiple visual indications, for example letters or numbers, arranged at the lever in the above-mentioned operating positions and corresponding to respective operating conditions of the auxiliary unit.

This makes it easier for the driver to visually identify the operating position in which to position the lever in order to place the auxiliary unit in the desired operating position.

The above-mentioned visual indications are backlit in a known way.

More specifically, the frame of the command devices comprises a light source and an opaque element visible to the driver and on which the visual indications are imprinted in a way that is transparent to light.

To enable the driver to perceive them immediately, the visual indications must be sufficiently large and arranged in a way that is easily visible to the driver so as not to reduce driving safety.

This limits the flexibility of choice in configuring the operating device.

There is a need in the industry to make it even easier for the driver to perceive visual indications without creating constraints on the configuration of the operating device.

### SUMMARY

The purpose of this invention is to provide an operating device for an actuator of a motor vehicle, which allows the above-specified need to be met in a simple and inexpensive way.

The above-mentioned purpose is achieved with this invention, as it relates to an operating device for an actuator of a motor vehicle according to what is defined in claim 1.

### BRIEF DESCRIPTION OF THE DRAWINGS

In order to better understand this invention, two nonlimiting preferred embodiments thereof will now be described by way of example with reference to the accompanying drawings, in which:
- Figure 1 is a perspective view of a motor vehicle comprising an operating device produced according to a first embodiment of this invention;

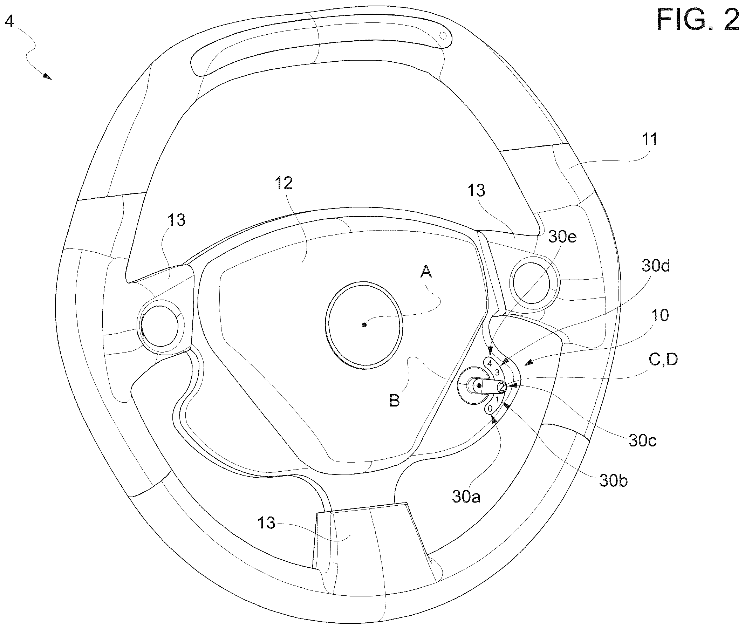

- Figure 2 is a perspective view of a steering wheel of the motor vehicle in Figure 1;
- Figure 3 shows, on an enlarged scale, some details of the steering wheel in Figure 1;
- Figure 4 is a cross section on an enlarged scale along the line IV-IV in Figure 3, with parts removed for clarity;
- Figure 5 illustrates the operating device in Figures 3 and 4 on a further enlarged scale; and
- Figure 6 is a cross section on an enlarged scale of an operating device produced according to a second embodiment of this invention.

### DESCRIPTION OF EMBODIMENTS

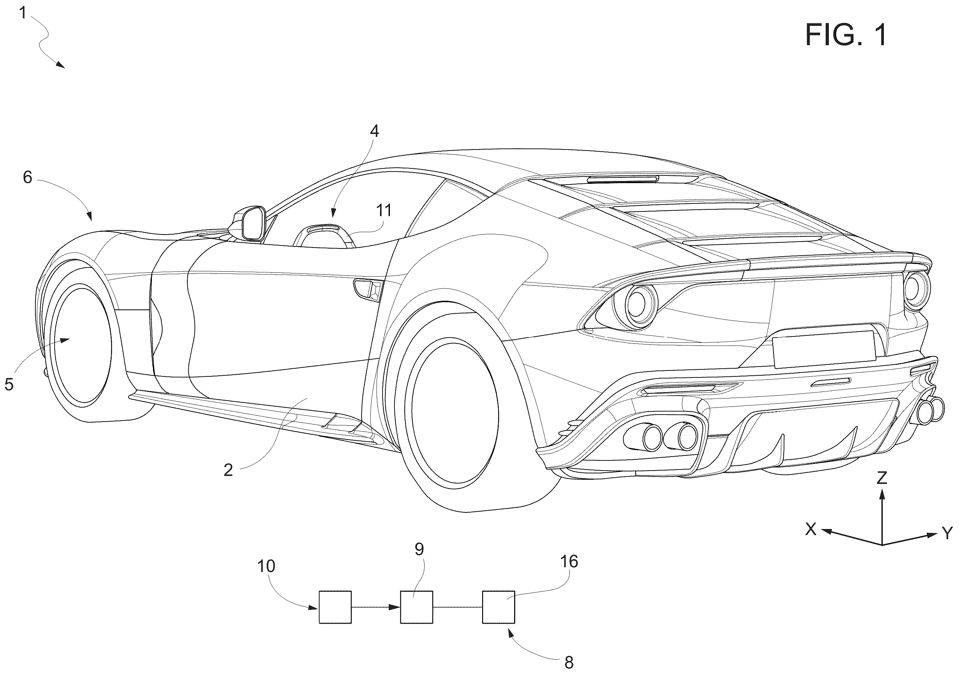

With reference to Figure 1, reference number 1 denotes a motor vehicle comprising a chassis 2 defining a passenger compartment 3.

It is also possible to define:
- a longitudinal axis X integral with the chassis 2, arranged, in use, horizontal and parallel to a normal forward direction of the motor vehicle 1 indicated in Figure 1;
- a transversal axis Y integral with the chassis 2, arranged, in use, horizontal and orthogonal to the axis X; and
- an axis Z integral with the chassis 2 and arranged, in use, vertical and orthogonal to the axes X, Y.

The aircraft 1 also comprises:
- a steering wheel 4 that rotates with respect to the chassis 2 around an axis A in order to steer a pair of wheels 5;
- multiple auxiliary units 8 (only schematically illustrated in Figure 1), such as lighting devices and windscreen wipers, which the driver can operate selectively; and
- multiple operating devices 10 designed to operate respective actuators 9 controlling corresponding auxiliary units 8.

More specifically, the steering wheel 4 essentially comprises:
- a rim 11;
- a hub 12 radially inside the rim 11 with reference to the axis A; and
- multiple spokes 13, three in the case illustrated, extending radially between the hub 12 and the rim 11.

Examples of auxiliary units 8 include lighting devices and windscreen wipers.

More specifically, each auxiliary unit 8 also comprises an output component 16 (also only schematically illustrated in Figure 1) controlled by the actuator 9 so as to move the output component 16 between multiple separate positions associated with respective auxiliary unit 8 functions.

In particular, there are five separate positions in the case illustrated and they are reached when the actuator 9 generates a first, second, third, fourth or fifth command respectively.

A single operating device 10 is described below.

More specifically, the operating device 10 comprises:
- a frame 15 fixed to the chassis 2 of the motor vehicle 1; and
- a lever 20 that the driver can grasp and which can be moved with respect to the frame 15 between multiple operating positions, five in the case illustrated, associated with respective auxiliary unit 8 functions.

More specifically, the lever 20 partially protrudes from the hub 12 of the steering wheel 4 and the frame 15 is supported and housed partly inside the hub 12 of the steering wheel 4.

The lever 20 can rotate with respect to the frame 15 around an axis B.

In the case illustrated, the axis B is parallel to the axis A.

The frame 15 also comprises:
- multiple backlit visual indications 30a, 30b, 30c, 30d, 30e associated with the fact that the lever 20 is arranged in an operating position associated with a corresponding function of the auxiliary unit 8;
- multiple light sources 35 designed to emit respective light beams F for backlighting the visual indications 30a, 30b, 30c, 30d, 30e; and
- multiple light guides 40 each positioned between a respective light source 35 and a respective visual indication 30a, 30b, 30c, 30d, 30e for backlighting the respective visual indication 30a, 30b, 30c, 30d, 30e

More specifically, the light beams F are directed along respective axes C parallel to the axis B and angularly spaced around the axis B.

The light guides 40 extend along respective axes C and are arranged at respective light sources 35.

In the case illustrated, each light guide 40 comprises optical fibres.

The visual indications 30a, 30b, 30c, 30d, 30e are angularly, equally spaced apart along an arc of the hub 12 of the frame 15.

Each visual indication 30a, 30b, 30c, 30d, 30e is arranged along a corresponding axis C at a respective light source 35 and light guide 40, so as to be backlit.

More specifically, when the lever 20 is placed in the first (second, third, fourth, fifth) operating position, the visual indication 30a (30b, 30c, 30d, 30e) is backlit and the auxiliary unit 8 performs the first (second, third, fourth) function respectively.

In the case illustrated, the light sources 35 are LED light sources.

In the case illustrated, there are five visual indications 30a, 30b, 30c, 30d, 30e, 30f and they indicate the respective numbers 0, 1, 2, 3 and 4.

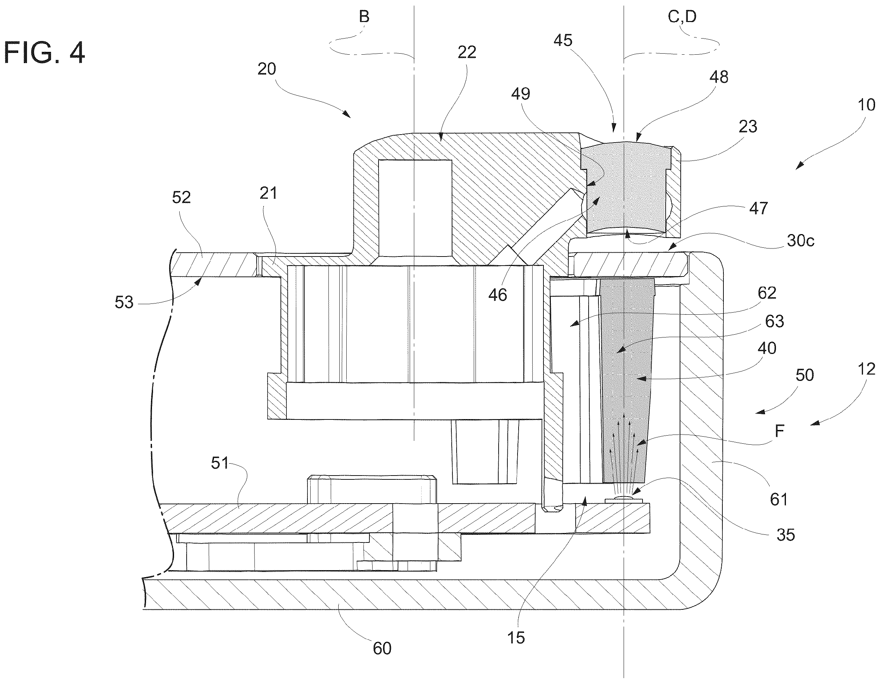

With reference to Figures 4 to 6, the frame 15 is fixed with respect to the axis B and is symmetrical with respect to the axis B.

The frame 15 comprises, in turn:
- a ring 51 equipped with multiple light sources 35 and housed within the casing;
- a second ring 52 opposed to the first ring 51 with reference to the axis B and on which the visual indications 30a, 30b, 30c, 30d, 30e are formed in angularly spaced positions; and
- a body 62 axially interposed between the rings 50, 51.

The body 62 defines multiple seats 63, five in the case illustrated, housing the respective light guides 40.

The hub 12 of the steering wheel 4 defines a casing 50 to house the frame 15.

The casing 50 essentially comprises:
- a disc 60 lying on a plane orthogonal to the axis B; and
- a tubular wall 61 of the axis B overhanging the disc 60.

The body 62 is radially spaced from the wall 61 and axially spaced from the wall 61.

The body 62 and the ring 51 are axially interposed between the disc 60 and the ring 52.

More precisely, the seats 63 extend along respective axes C and are each interposed between a respective light source 35 and a respective visual indication 30a, 30b, 30c, 30d, 30e parallel to a respective axis C.

The ring 52 comprises, in turn, a pair of opposite surfaces 53, 54.

The surface 54 is opaque and the visual indications 30a, 30b, 30c, 30d, 30e are printed on it in transparent material.

The lever 20 comprises, in turn:
- a tubular body 21 housed within the frame 15, operationally connected to the actuator 9; and
- a knob 22 projecting outside the frame 15 and the hub 12, and comprising an arm 23 radial to the axis B that the driver can grasp.

Advantageously, the lever 20 comprises an optical magnifying element 45, which is optically coupled with a corresponding light guide 40 and is designed to magnify the corresponding visual indication 30a, 30b, 30c, 30d, 30e when the lever 20 is in the corresponding operating position.

More specifically, the arm 23 of the lever 20 comprises a through hole 49 extending along an axis D parallel to and radially spaced apart from the axis B.

The hole 49 houses the magnifying element 45.

The hole 49 and the magnifying element 45 overlap parallel to the axis D at the ring 51.

The magnifying element 45 is a magnifying lens 46 and is bounded axially by a convex surface 47 and a concave surface 48 opposite each other parallel to the axis D.

The surface 47 delimits the lens 46 on the side of the ring 52 and the surface 48 delimits the lens 46 on the axially opposite side of the axis D.

When the lever 20 is arranged in each of the first, second, third, fourth and fifth operating positions, the axis D of the hole 49 coincides with the axis C along which a corresponding light source 35, a corresponding light guide 40 and a corresponding visual indication 30a, 30b, 30c, 30d, 30e overlap.

Consequently, when the lever 20 is arranged in each of the first, second, third, fourth and fifth operating positions, the magnifying element 45 magnifies a corresponding backlit visual indication 30a, 30b, 30c, 30d, 30e.

In use, the light sources 35 backlight the visual indications 30a, 30b, 30c, 30d, 30e.

More specifically, the light sources 35 generate respective parallel light beams F, which are directed by the light guides 40 along the corresponding axes C.

These light beams F are directed onto the ring 52, pass through the transparent surface 53 and are reflected by the opaque surface 54, except for the visual indications 30a, 30b, 30c, 30d, 30e made of transparent material.

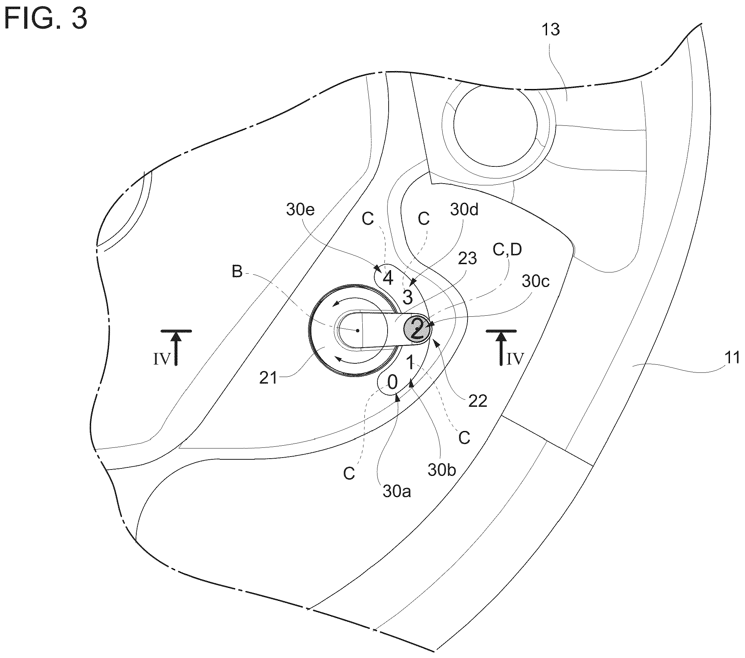

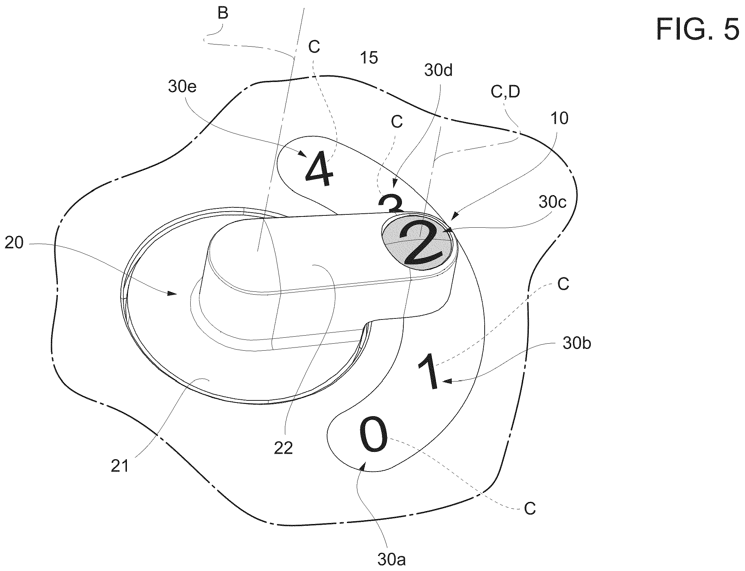

The operation of the operating device is illustrated below, by way of example, with reference to Figures 3 and 5, in which the lever 20 is arranged in the third operating position associated with the third command for the actuator 9.

In this condition, the axis D of the hole 49 coincides with the axis C along which the third visual indication 30c, the corresponding light source 35 and the corresponding light guide 40 overlap.

In this way, the lens 46 makes the backlit and enlarged visual indication 30c available to the driver.

If the driver wishes, for example, to set the fourth command on the actuator 14, the driver rotates the lever 20 to the fourth operating position.

In this condition, the axis D of the hole 49 coincides with the axis C along which the fourth visual indication 30d, the corresponding light source 35 and the corresponding light guide 40 overlap.

In this way, the lens 46 makes the backlit and enlarged visual indication 30d available to the driver.

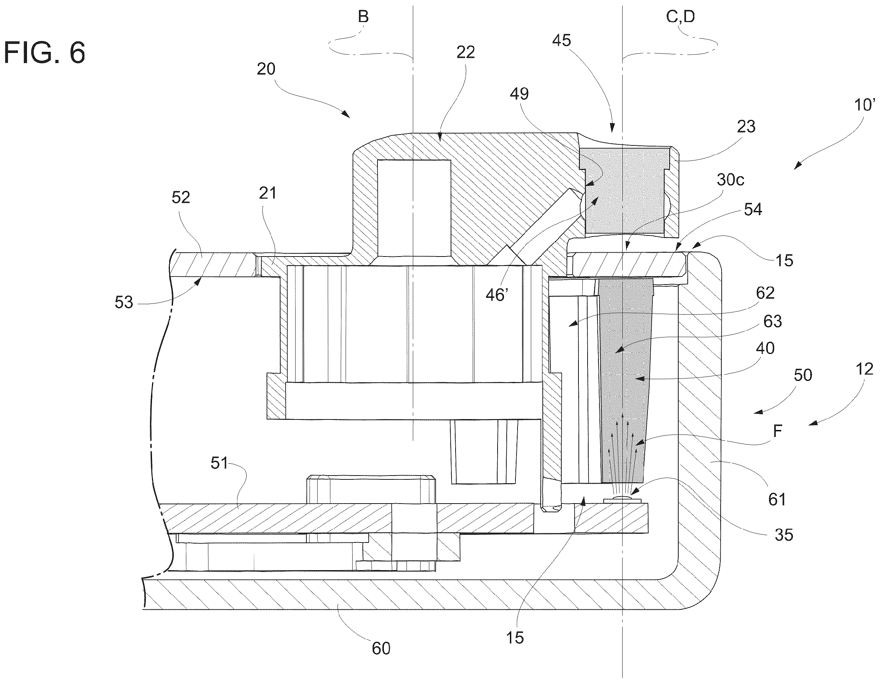

With reference to Figure 6, reference number 10' denotes an operating device according to a second embodiment of this invention.

The operating device 10' is similar to the first operating device 10 and will be described below only as far as it differs from the latter; the same or equivalent parts of the operating devices 10, 10' will be distinguished, where possible, by the same reference numbers.

The operating device 10' differs from the first operating device 10 in that it comprises an optical fibre collimator 46' instead of the lens 46.

The operation of the operating device 10' is similar to that of the first operating device 10 and is only described as far as it differs from this.

In particular, the optical fibre collimator 46' enlarges a respective backlit visual indication 30a, 30b, 30c, 30d, 30e.

The advantages enabled by the operating device 10, 10' produced according to this invention will be apparent from an examination thereof.

In particular, the lever 20 comprises an optical magnifying element 45, which is optically coupled to the light guide 40 and is designed to magnify the backlit visual indication 30a, 30b, 30c, 30d, 30e associated with the corresponding operating position of the lever 20.

In this way, the backlit visual indication 30a, 30b, 30c, 30d, 30e associated with the corresponding operating position of the lever 20 is magnified and thus easily perceived by the driver.

It is thus possible to produce the backlit visual indications 30a, 30b, 30c, 30d, 30e with even small dimensions without the driver having to be distracted from driving to view the operating position of the selected lever 20.

In this way, the flexibility of the design configuration of the operating device 10, 10' and, thus, the steering wheel 4 is significantly increased compared to the known solutions described in the introductory part of this description.

Finally, it is clear that changes may be made to the operating device 10, 10' according to this invention, and variations produced thereto, that, in any case, do not depart from the scope of protection defined by the claims.

In particular, the operating device 10, 10' could comprise a single light source 35 and a single light guide 40 common to all the visual indications 30a, 30b, 30c, 30d, 30e.

## Claims

1. An operating device (10, 10') for an actuator (14) of a motor vehicle (1), comprising:
- a frame (15), which can be fixed to a steering wheel (4) of said motor vehicle (1); and
- a lever (20), which can be grasped by a user and can be moved, relative to said frame (15), to a plurality of operating positions, which are spaced apart from one another and are associated with respective distinct commands for said actuator (14);
said frame (15) further comprising:
- a plurality of visual indications (30a, 30b, 30c, 30d, 30e) associated with said operating positions of said lever (20) and representative of said commands;
- at least one light source (35) designed to emit a light beam (F);
- at least one optical conveying element (40), which is optically interposed between said light source (35) and said visual indications (30a, 30b, 30c, 30d, 30e) along a first axis (C) so as to backlight said visual indications (30a, 30b, 30c, 30d, 30e);
**characterized by** said lever (20) comprising an optical magnifying element (45), which is optically coupled to said conveying element (40) and is adapted to magnify each visual indication (30a, 30b, 30c, 30d, 30e), when said lever (20) is in said corresponding position.

2. The operating device according to claim 1, **characterized by** said lever (20) comprising a hole (49) housing said magnifying element (45) and extending along a second axis (D).

3. The operating device according to claim 2, **characterized by** said frame (15) comprising a surface (54) made of an opaque material, on which said visual indications (30a, 30b, 30c, 30d, 30e) are arranged and which faces said optical conveying element (40);
said visual indications (30a, 30b, 30c, 30d, 30e) being transparent;
said hole (49) being arranged so as to face each visual indication (30a, 30b, 30c, 30d, 30e) and said first and second axes (C, D) being coincident, when said lever (20) is in the corresponding operating position.

4. The operating device according to any one of the preceding claims, **characterized by** said optical conveying element (40) comprising optical fibres.

5. The operating device according to any one of the preceding claims, **characterized by** said magnifying element (45) being a magnifying lens (46).

6. The operating device according to claim 5, **characterized by** said magnifying lens (46) comprising, in turn, a first axial end surface (47) and a second axial end surface (48) opposite said first surface (47);
said first surface (47) being convex and axially interposed between said visual indications (30a, 30b, 30c, 30d) said second surface (48) along said second axis (D);
said second surface (48) being concave.

7. The operating device according to any one of the claims from 1 to 4, **characterized by** said magnifying element (45) being an optical fibre collimator (46').

8. A steering wheel (4) for a motor vehicle (1), comprising:
- a hub (12), which can rotate around a third axis (A) and houses said frame (15); and
- an operating device (10, 10') according to any one of the preceding claims;
said lever (20) comprising an arm (23), which can be grasped by a driver and is located on the outside of said hub (12).

9. A motor vehicle (1) comprising a steering wheel (4) according to claim 8.
